# EUROPEAN PATENT SPECIFICATION

(11) **EP 4 497 316 B1**
(45) Date of publication and mention of the grant of the patent: **10.09.2025**
(21) Application number: 24179790.1
(22) Date of filing: 04.06.2024
(51) Int. Cl.: A01D 34/68, A01D 34/78, A01D 34/82, B60L 3/00, B60L 7/18, B60L 50/51

(54) **PUSH MOWER**
HANDGEFÜHRTER RASENMÄHER
TONDEUSE À GAZON À POUSSÉE

(30) Priority: 25.07.2023 CN 202310916347
(43) Date of publication of application: 29.01.2025
(73) Proprietor: Nanjing Chervon Industry Co., Ltd., Nanjing, Jiangsu 211106 (CN)
(72) Inventor: FENG, Jifeng, Nanjing (CN); XIAN, Chao, Nanjing (CN); SU, Wei, Nanjing (CN)
(74) Representative: Sun, Yiming

(56) References cited:
- WO-A1-2021/013251
- US-A1- 2005 072 132
- US-A1- 2008 086 997
- US-A1- 2023 115 229

## Description

### TECHNICAL FIELD

The present disclosure relates to garden tools, for example, a push working machine and mower.

### BACKGROUND

In a self-propelled garden tool such as a push mower or a push snow thrower, an operating member is generally disposed on the handle and used for a user to control the operation states of a traveling motor and a working motor of the machine. The traveling motor generates a motor energy under the action of an external force. For example, after the work is completed, when the body is powered off and the user drags the mower backward, the traveling motor rotates in reverse to generate the motor energy; or during normal operation, when the user drags the mower backward, the traveling motor rotates in reverse to generate the motor energy; or when the mower is pushed forward in other states, the traveling motor can also generate the motor energy. The motor energy easily discharges to a control board in reverse, causing some abnormal conditions in the machine or even causing damage to the machine.

This part provides background information related to the present application, which is not necessarily the existing art. US 2023/115229 A1, WO 2021/013251 A1, US 2005/072132 A1, and US 2008/086997 A1 disclose known push mowers.

### SUMMARY

The present application aims to solve or at least alleviate part or all of the preceding problems. For this reason, an object of the present application is to provide a safer push mower.

To achieve the preceding object, the present application adopts the technical solutions below.

A push mower includes a body including at least a traveling assembly, a traveling motor driving the traveling assembly, a cutting assembly, and a cutting motor driving the cutting assembly; a handle device connected to the body and including at least an operating member for a user to operate; a controller configured to control at least the working states of the traveling motor and the cutting motor; and a power interface for connecting a power supply energy capable of supplying power to at least the traveling motor and the cutting motor. The traveling motor is drivable by an external force to generate a motor energy. The controller is configured to, when the traveling motor is driven by the external force to generate the motor energy, cut off an electrical energy transmission path of the traveling motor.

In an example, the push mower further includes a circuit switch for controlling a power supply circuit of the traveling motor to be turned on and off.

In an example, the controller is further configured to, when the traveling motor is driven by the external force, control the circuit switch to turn off the power supply circuit; and when the traveling motor is driven by the power supply energy connected to the power interface, control the circuit switch to turn on the power supply circuit.

In an example, the circuit switch includes a relay.

In an example, the circuit switch includes a normally open relay.

In an example, the relay is a relay with at least two phases.

In an example, the circuit switch includes a thyristor.

In an example, the traveling motor includes a wheel hub motor.

In an example, when the push mower is pushed forward or pulled backward by an external force to move, the traveling motor is capable of generating the motor energy.

A push working machine includes a body including at least a traveling assembly, a traveling motor driving the traveling assembly, a cutting assembly, and a cutting motor driving the cutting assembly; a handle device connected to the body and including at least an operating member for a user to operate; a controller configured to control at least the working states of the traveling motor and the cutting motor; and a power interface for connecting power supply energy capable of supplying power to at least the traveling motor and the cutting motor. The traveling motor is drivable by an external force to generate a motor energy. The controller is configured to, when the traveling motor is driven by the external force to generate the motor energy, control the motor energy not to supply power to at least the cutting motor.

In an example, the controller is further configured to, when the power interface is connected to a battery pack, control the motor energy to charge the battery pack.

In an example, the push working machine further includes an indicator light, where the controller is further configured to control the motor energy to supply power to the indicator light.

In an example, the push working machine further includes a user interface (UI) terminal, where the controller is further configured to control the motor energy to supply power to the UI terminal.

In an example, the push working machine further includes an energy storage element, where the controller is further configured to control the motor energy to be stored in the energy storage element.

In an example, the push working machine further includes a circuit switch for controlling a power supply circuit of the traveling motor to be turned on and off.

In an example, the controller is further configured to, when the traveling motor is driven by the external force, control the circuit switch to turn off the power supply circuit; and when the traveling motor is driven by the power supply energy connected to the power interface, control the circuit switch to turn on the power supply circuit.

In an example, the circuit switch includes a relay.

A push working machine includes a body including at least a traveling assembly, a traveling motor driving the traveling assembly, a cutting assembly, and a cutting motor driving the cutting assembly; a first driver circuit configured to drive the traveling motor; a second driver circuit configured to drive the cutting motor; a handle device connected to the body and including at least an operating member for a user to operate; a controller configured to control at least the working states of the traveling motor and the cutting motor; and a power interface for connecting a power supply energy capable of supplying power to at least the traveling motor and the cutting motor. The traveling motor is drivable by an external force to generate a motor energy. The controller is configured to, when the traveling motor is driven by the external force to generate the motor energy, control the second driver circuit to change a conduction state to short-circuit stator windings of the cutting motor.

In an example, the push working machine further includes an indicator light, where the controller is further configured to control the motor energy to supply power to the indicator light.

In an example, the push working machine further includes a UI terminal, where the controller is further configured to control the motor energy to supply power to the UI terminal.

### BRIEF DESCRIPTION OF THE DRAWINGS

To illustrate technical solutions in examples of the present application more clearly, drawings used in the description of the examples are briefly described below. Apparently, the drawings described below illustrate only part of the examples of the present application, and those of ordinary skill in the art may obtain other drawings based on the drawings described below on the premise that no creative work is done.
FIG. 1 is a structural view of a mower according to an example of the present application.
FIG. 2 is a schematic diagram of a control circuit of the mower in FIG. 1.
FIG. 3 is a schematic diagram of a control circuit of a mower in an example of the present application.

### DETAILED DESCRIPTION

Before any example of the present application is explained in detail, it is to be understood that the present application is not limited to the application in the structural details and arrangement of components set forth in the following description or shown in the preceding drawings.

In the present application, the term "comprising", "including", "having", or any other variant thereof is intended to encompass a non-exclusive inclusion so that a process, method, article, or apparatus that includes a series of elements not only includes those elements but also includes other elements that are not expressly listed or further includes elements that are inherent to such a process, method, article, or apparatus. In the absence of more limitations, an element defined by the statement "including a..." does not exclude the presence of additional identical elements in a process, method, article, or device including the element.

In the present application, the term "and/or" is an association relationship describing associated objects and indicates that three relationships may exist. For example, A and/or B may indicate that A exists alone, both A and B exist, and B exists alone. In addition, in the present application, the character "/" generally indicates an "and/or" relationship between associated objects before and after the character "/".

In the present application, the term "connected", "combined", "coupled", or "mounted" may be directly "connected", "combined", "coupled", or "mounted" and may also be indirectly "connected", "combined", "coupled", or "mounted". For example, the direct connection indicates that two parts or assemblies are connected together without an intermediate piece, and the indirect connection indicates that two parts or assemblies are separately connected to at least one intermediate piece and the two parts or assemblies are connected through the intermediate piece. Furthermore, "connected" and "coupled" are not limited to physical or mechanical connections or couplings and may include electrical connections or couplings.

In the present application, it is to be understood by those of ordinary skill in the art that a relative term (for example, "about", "approximately", or "basically") used in conjunction with quantities or conditions is inclusive of the stated value and has the meaning indicated by the context. For example, the relative term includes at least the degree of error associated with the measurement of a particular value, the tolerance resulting from manufacturing, assembly, and usage and associated with a particular value, and the like. Such a term is to be construed as disclosing a range defined by the absolute values of two endpoints. The relative term may refer to plus or minus a certain percentage (such as 1%, 5%, 10%, or more) of an indicated value. A value not modified by the relative term should also be disclosed as a particular value with a tolerance. In addition, when expressing a relative angular position relationship (for example, basically parallel or basically perpendicular), "basically" may refer to plus or minus a certain degree (such as 1 degree, 5 degrees, 10 degrees, or more) based on an indicated angle.

In the present application, it is to be understood by those of ordinary skill in the art that the function implemented by an assembly may be implemented by one assembly, multiple assemblies, one part, or multiple parts. Similarly, the function implemented by a part may be implemented by one part, one assembly, or a combination of multiple parts.

In the present application, the terms "upper", "lower", "left", "right", "front", "rear", and other orientation words are described by the orientations and position relations shown in the drawings and should not be understood as a limitation to the examples of the present application. In addition, in the context, it is to be understood that when an element is connected "above" or "below" another element, the element not only can be directly connected "above" or "below" another element but also can be indirectly connected "above" or "below" another element through an intermediate element. It is also to be understood that orientation words such as an upper side, a lower side, a left side, a right side, a front side, and a rear side not only represent positive orientations but also may be understood as lateral orientations. For example, the term "below" may refer to "directly below", "on a lower left", "on a lower right", "on a front lower side", "on a rear lower side", and the like.

In the present application, the terms "controller", "processor", "central processing unit", "central processing unit (CPU)", and "microcontroller unit (MCU)" are interchangeable. Where a unit such as the "controller", the "processor", the "central processing unit", the "CPU", or the "MCU" is used to implement specific functions, these functions may be implemented by a single one of the preceding units or multiple preceding units unless otherwise indicated.

In the present application, the term "device", "module", or "unit" is used to implement a specific function in the form of hardware or software.

In the present application, the terms "computing", "judging", "controlling", "determining", "identifying", and the like refer to the operations and processes of a computer system or similar electronic computing device (for example, the controller, the processor, or the like).

In addition to a mower, a push working machine in the present application may also include a push snow thrower, a push warehouse trailer, a picnic trolley, a trailer, or another self-propelled electrical device. A push mower that can be operated by a user from the rear side of the push device is used as an example for the description below.

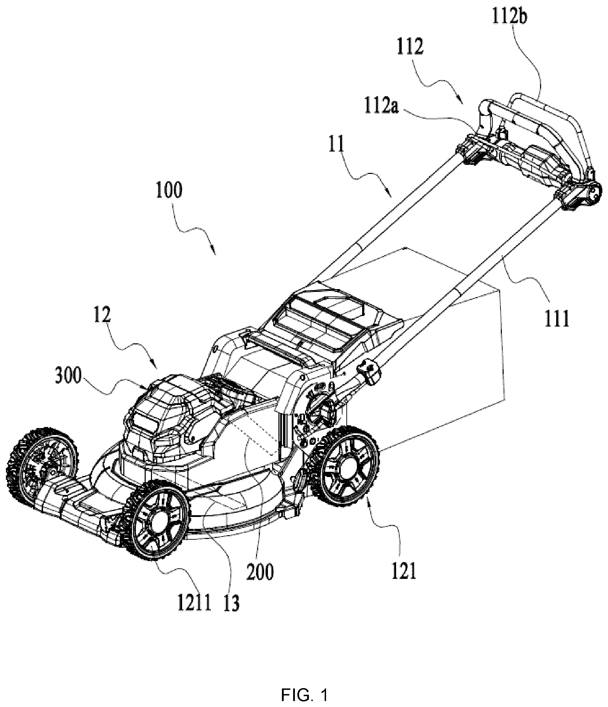

Referring to FIG. 1, a mower 100 mainly includes a handle device 11, a connecting rod 111, an operating member 112, a self-propelled operation trigger 112a, a body 12, and a traveling assembly 121. The body 12 includes the traveling assembly 121, a cutting assembly 13, and a power mechanism (not shown in the figure). Optionally, the handle device 11 includes the connecting rod 111 and the operating member 112 that can be held. The operating member 112 includes at least a grip for the user to hold and the self-propelled operation trigger 112a, the connecting rod 111 is a hollow long rod structure, and the connecting rod 111 connects the operating member 112 to the body 12. The traveling assembly 121 is mounted onto the body 12 and can rotate around a rotary shaft so that the entire mower 100 can move on the ground. In this example, the traveling assembly 121 includes traveling wheels 1211 of the mower 100 and the power mechanism for driving the traveling wheels 1211 to travel.

In this example, the mower 100 has a self-propelled control function. The power mechanism can drive the traveling assembly 121 to rotate to drive the mower 100 to move on the ground so that the user does not need to manually push the mower 100 to move and mow. Specifically, the power mechanism may be a traveling motor that can output a driving force for driving the traveling assembly 121 to rotate. In some examples, the handle device 11 of the mower 100 is further integrated with a mowing operation trigger 112b. For example, the mowing operation trigger 112b and the self-propelled operation trigger 112a of the mower 100 are all integrated into the operating member 112. In addition, the operating switch 112a is not limited to a physical switch or a signal switch, and any device that can control the current in a circuit to be on or off is applicable. In fact, the preceding self-propelled operation trigger 112a and/or the preceding mowing operation trigger 112b are not limited to current control and may also control the self-propelled function to be enabled or disabled by mechanical means.

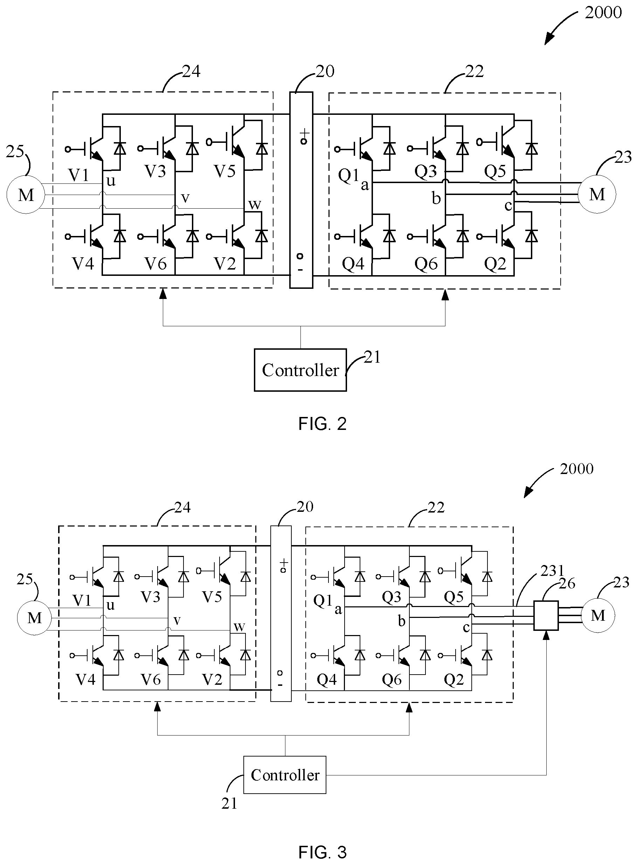

A main control board 200 may be disposed on the body 12 or the handle device 11, and a control circuit 2000 on the main control board 200 can control at least the traveling and/or mowing of the mower 100. As shown in FIG. 2, the control circuit 2000 may include at least a power interface 20, a controller 21, a first driver circuit 22, a traveling motor 23, a second driver circuit 24, and a cutting motor 25. The cutting motor 25 is used to drive the cutting assembly 13.

The power interface 20 may be connected to a direct current (DC) power supply or an alternating current (AC) power supply. The control circuit 2000 may include a circuit capable of performing power conversion on the connected power supply. For example, the control circuit 2000 may include a rectifier circuit, a filter circuit, or a voltage converter circuit capable of rectifying, filtering, or performing boost conversion, buck conversion, or other conversions on the power cord connected to the power interface 20. It is to be understood that the mower 100 may include two or more power interfaces of the same or different types. For example, the mower 100 may include two DC power interfaces connectable to at least two battery packs. In this example, the power interface 20 is used for connecting a battery pack 300 for a power tool. That is to say, the battery pack 300 can supply power to the mower 100 and can also supply power to multiple power tools of different types. For example, the rated voltage of the battery pack 300 is greater than or equal to 40 V, greater than or equal to 36 V, or greater than or equal to 50 V. This example does not specifically limit the appearance and structure of the battery pack 300.

In some examples, the power tool to which the battery pack 300 can supply power may be a handheld power tool, such as a drill, a hedge trimmer, or a sander. Alternatively, the power tool may be a table tool, such as a table saw or a miter saw. Alternatively, the power tool may be a riding power tool, such as a riding mower, a riding vehicle, or an all-terrain vehicle. Alternatively, the power tool may be a robotic tool, such as a robotic mower or a robotic snow thrower. In some examples, the power tool may be an electric drill, an electric lamp, an electric vehicle, or the like. In some examples, the power tool may be a garden tool, such as the hedge trimmer, a blower, or a chain saw. Alternatively, the power tool may be a decoration tool, such as a screwdriver, a nail gun, a circular saw, or the sander. In some examples, the power tool may be a plant care tool, such as a grass trimmer, the hedge trimmer, or the chain saw. Alternatively, the power tool may be a cleaning tool, such as the blower, a snow thrower, or a washer. Alternatively, the power tool may be a drilling tool, such as the drill, the screwdriver, a wrench, or an electric hammer. Alternatively, the power tool may be a sawing tool, such as a reciprocating saw, a jigsaw, or the circular saw. Alternatively, the power tool may be a table tool, such as the table saw, the miter saw, a metal cutter, or an electric router. Alternatively, the power tool may be a sanding tool, such as an angle grinder or the sander. Alternatively, the power tool may be another tool, such as a lamp or a fan.

The first driver circuit 22 is connected between the controller 21 and the traveling motor 23 and is used for driving the traveling motor 23 to operate. In an example, the first driver circuit 22 is electrically connected to stator windings of phases of the traveling motor 23 and is used for transmitting the power supply current to the stator windings to drive the traveling motor 23 to rotate. As an example, as shown in FIG. 2, the first driver circuit 22 includes multiple switching elements Q1, Q2, Q3, Q4, Q5, and Q6. Gate terminals of the switching elements are electrically connected to the controller 21 and are used for receiving control signals from the controller 21. Drains or sources of the switching elements are connected to the stator windings of the traveling motor 23. The switching elements Q1 to Q6 receive the control signals from the controller 21 to change respective conduction states, thereby changing the current loaded to the stator windings of the traveling motor 23 by the power supply. **In** an example, the switching elements Q1 to Q6 in the first driver circuit 22 may be a three-phase bridge driver circuit including six controllable semiconductor power devices (such as field-effect transistors (FETs), bipolar junction transistors (BJTs), and insulated-gate bipolar transistors (IGBTs)) or any other types of solid-state switches (such as the IGBTs and the BJTs).

The second driver circuit 24 is connected between the controller 21 and the cutting motor 25 and is used for driving the cutting motor 25 to operate. For the circuit structure and drive mode of the second driver circuit 24, reference may be made to the circuit structure and drive mode of the first driver circuit 22, and the details are not repeated here.

The controller 21 can detect at least an operating signal generated after the handle device 11 is operated by the user and then control, according to the detected operating signal, the traveling motor 23 and/or the cutting motor 25 to operate. For example, after the user operates the handle device 11 to start the machine, the traveling motor 23 and/or the cutting motor 25 are powered on, and the controller 21 detects a thrust signal from the handle device 11 and then controls the traveling motor 23 to perform moving forward, turning, deceleration, acceleration, or other operations; or the controller 21 detects a mowing signal and controls the cutting motor 25 to operate so that the cutting blade cuts vegetation.

After the mower 100 finishes the work, the mower 100 may be dragged backward by the user, or the mower needs to be pushed backward for a certain distance according to the design of the mowing path and then moved forward again to mow the grass. That is to say, the mower 100 may be forcibly dragged by an external force to travel backward. In this case, the traveling motor 23 is forcibly driven by the external force (that is, the force applied by the user to the handle device 11) rather than controlled and driven by the controller 21. The traveling motor 23 is driven by the external force to rotate to generate a motor energy. In this case, the traveling motor 23 may be understood as a generator and can generate electric power through rotation. In other examples, when the mower 100 is driven forward or backward by the external force, the traveling motor 23 might generate the motor energy. For example, the traveling motor 23 is a wheel hub motor, and even if the mower 100 is driven forward by the external force, the traveling motor 23 can generate the motor energy.

In some examples, when the power interface 20 is not connected to the battery pack 300, the traveling motor 23 dragged by the external force can generate the motor energy. In some examples, when the power interface 20 is connected to the battery pack 300, the traveling motor 23 dragged by the external force can generate the motor energy. In other words, whether the power interface 20 is connected to the battery pack 300, the traveling motor 23 generates the motor energy.

It is to be noted that the motor energy generated by the traveling motor 23 may be fed back to the main control board 200 so that after the controller 21 on the main control board 200 is powered on, the controller 21 may control other functional accessories in the mower 100 to work. For example, the controller 21 may control an indicator light to light up, control a display screen to light up, or control the cutting motor 25 to rotate. In particular, the main control board 200 might power on the cutting motor 25, causing the cutting motor 25 to be driven by the unexpected electrical energy and leading to certain safety hazards, for example, causing personal safety accidents or damaging the device.

The solutions provided in the examples of the present application can at least reduce or avoid the occurrence of the preceding case.

In an example, when the controller 21 detects the motor energy fed back by the traveling motor 23, the controller 21 can control the motor energy not to be transmitted to at least the cutting motor 25. Many methods for controlling the motor energy not to be transmitted to the cutting motor 25 exist, such as cutting off an electrical energy transmission path, transmitting the motor energy to other functional modules, or storing the motor energy for later use. It is to be noted that by detecting the magnitude or direction of the current, the controller 21 may determine whether the electrical energy in the control circuit 2000 is the motor energy generated by the traveling motor 23, or the electrical energy transmitted by the control circuit 2000 and detected by the controller 21 in the case where the power interface 20 is not connected to the battery pack 300 may be considered as the motor energy generated by the traveling motor 23.

In an example, referring to FIG. 3, a circuit switch 26 is disposed on the connection path between the traveling motor 23 and the first driver circuit 22, and the circuit switch 26 is electrically connected to at least the controller 21. That is to say, the circuit switch 26 is disposed on a power supply circuit 231 of the traveling motor 23. The circuit may be a bidirectional transmission path for current. That is, the power supply inputted from the power interface 20 can be transmitted to the traveling motor 23 through the power supply circuit 231; similarly, the motor energy generated by the traveling motor 23 driven by the external force can also be transmitted back through the power supply circuit 231 to the power interface 20, the main control board 200, or other functional modules, such as the indicator light or a UI terminal.

In this example, the controller 21 may control the circuit switch 26 to be turned on or off according to whether the traveling motor 23 generates the motor energy. During the normal operation of the mower 100, that is, when the power supply connected to the power interface 20 can supply power to the traveling motor 23 and the controller 21 can output a control signal to control the traveling motor 23 to rotate, the controller 21 controls the circuit switch 26 to be turned on, so as to turn on the power supply circuit 231. When the controller 21 detects that the traveling motor 23 generates the motor energy, the controller 21 may control the circuit switch 26 to be turned off, so as to turn off the power supply circuit 231 of the traveling motor 23, and the motor energy generated through the rotation of the traveling motor 23 is not transmitted to the power interface 20, other functional modules, or the cutting motor 25, thereby preventing other functional modules in the mower 100 from operating abnormally or preventing the cutting motor 25 from rotating and causing a safety accident.

**In** an example, the circuit switch 26 may be a relay. **In** an example, the relay is a relay with at least two phases. For example, the relay may be a two-phase relay or a three-phase relay, that is, the relay can be electrically connected to at least two phases of windings of the traveling motor 23 and control the conduction states of at least two phases of windings of the traveling motor 23. **In** this example, the relay is a normally open relay and can maintain a normally open state. For example, when the mower 100 is operating normally, the controller 21 may control the normally open relay to switch from the normally open state to the closed state to turn on the power supply circuit 231. When the traveling motor 23 generates the motor energy, the controller 21 controls the relay to return to the normally open state to turn off the power supply circuit 231.

**In** an example, the circuit switch 26 may be a thyristor.

**In** the preceding example, since the circuit switch 26 is connected to three phases of windings of the traveling motor 23, when the circuit switch 26 is turned off, the motor energy generated by the traveling motor 23 cannot be transmitted out, but is consumed in the windings and converted into heat.

**In** an example, the circuit switch 26 may be connected to three phases of windings of the cutting motor 25. When the traveling motor 23 generates the motor energy, the controller 21 controls the circuit switch 26 to be turned off so that the motor energy cannot drive the cutting motor 25. The motor energy in this case may cause other functional modules to operate abnormally. For example, the motor energy may cause the indicator light to light up abnormally or cause the UI interface to light up abnormally.

In an example, the functional module in the mower 100 may have at least two working modes. When the mower 100 operates normally, the functional module operates in the first working mode. When the motor energy causes the functional module to operate, the functional module operates in the second working mode. For example, when the mower 100 operates normally, the indicator light works normally; and when the traveling motor 23 generates the motor energy to light up the indicator light, the indicator light may flash with a certain frequency, or light up in a preset color or a preset number to indicate to the user that the motor energy generated by the traveling motor 23 supplies power currently, thereby preventing the user from thinking that the mower is damaged. Alternatively, when the traveling motor 23 generates the motor energy to light up the UI terminal, "no special abnormality" or other prompt texts may be displayed through the UI interface to remind the user that the current abnormal lighting is normal.

In an example, when the power interface 20 is connected to the battery pack 300, if the traveling motor 23 generates the motor energy, the controller 21 may control the motor energy to charge the battery pack 300, that is, the motor energy generated by the traveling motor 23 is recycled to the battery pack 300. In this manner, not only can the abnormality of other functional modules and the abnormal starting of the cutting motor 25 caused by the motor energy be avoided, but also the power of the battery pack 300 can be increased.

In an example, an energy storage element (not shown) may further be disposed in the control circuit 2000, and the controller 21 may store the motor energy generated by the traveling motor 23 into the energy storage element. In an example, the energy storage element may be a capacitor or a resistor, and the type of the energy storage element is not limited here. In this example, the energy storage element may release the stored electrical energy when the battery pack 300 is low on power, or supply the stored electrical energy to other functional modules, or transmit the stored electrical energy to the battery pack 300.

In an example, when the motor energy generated by the traveling motor 23 is detected, the controller 21 may control at least the conduction states of the switching elements in the second driver circuit 24 to short-circuit the three phases of windings of the cutting motor 25, thereby consuming the motor energy by the short-circuit braking of the cutting motor 25. For example, the controller 21 may control three low-side switching elements in the second driver circuit 24 to be turned on, thereby short-circuiting the three phases of windings u, v, and w of the cutting motor 25.

In the present application, at least one of the solutions in the preceding various examples may be used to prevent the motor energy generated by the traveling motor 23 from driving the cutting motor 25. For example, on the basis of setting the circuit switch 26 in the control circuit 2000, the three phases of windings of the cutting motor 25 may be short-circuited simultaneously, thereby preventing the controller 21 from failing to control the circuit switch 26 or avoiding the short-circuit braking failure. Combinations of other examples are not listed one by one here.

The basic principles, main features, and advantages of the present application are shown and described above. It is to be understood by those skilled in the art that the preceding examples do not limit the present application in any form, and all technical solutions fall within the scope of the claims.

## Claims

1. A push mower (100), comprising:
a body (12) comprising at least a traveling assembly (121), a traveling motor (23) driving the traveling assembly, a cutting assembly (13), and a cutting motor (25) driving the cutting assembly;
a first driver circuit (22) configured to drive the traveling motor;
a second driver circuit (23) configured to drive the cutting motor;
a handle device (11) connected to the body and comprising at least an operating member (112) for a user to operate;
a controller (21) configured to control the traveling motor and the cutting motor; and
a power interface (20) for connecting a power supply energy capable of supplying power to at least the traveling motor and the cutting motor;
**characterized in that**
the traveling motor is drivable by an external force to generate a motor energy; and
wherein the controller is configured to:
cut off an electrical energy transmission path of the traveling motor when the traveling motor is driven by the external force to generate the motor energy;
or control the motor energy not to supply power to at least the cutting motor when the traveling motor is driven by the external force to generate the motor energy; and
or control the second driver circuit to change a conduction state to short-circuit stator windings of the cutting motor when the traveling motor is driven by the external force to generate the motor energy.

2. The push mower of claim 1, further comprising a circuit switch (26), wherein the circuit switch is configured to control a power supply circuit of the traveling motor to be turned on and off to cut off an electrical energy transmission path of the traveling motor when the traveling motor is driven by the external force to generate the motor energy.

3. The push mower of claim 2, wherein the controller is further configured to control the circuit switch to turn off the power supply circuit when the traveling motor is driven by the external force and control the circuit switch to turn on the power supply circuit when the traveling motor is driven by the power supply energy connected to the power interface.

4. The push mower of claim 2, wherein the circuit switch comprises a relay.

5. The push mower of claim 2, wherein the circuit switch comprises a normally open relay.

6. The push mower of claim 4, wherein the relay is a relay with at least two phases.

7. The push mower of claim 2, wherein the circuit switch comprises a thyristor.

8. The push mower of claim 1, wherein the traveling motor comprises a wheel hub motor.

9. The push mower of claim 1, wherein the traveling motor is capable of generating the motor energy when the push mower is pushed forward or pulled backward by an external force to move.

10. The push mower of claim 1, wherein the controller is configured to control the motor energy not to supply power to at least the cutting motor and further configured to control the motor energy to charge the battery pack when the power interface is connected to a battery pack (300).

11. The push mower of claim 1, further comprising an indicator light, wherein the controller is configured to control the motor energy not to supply power to at least the cutting motor and further configured to control the motor energy to supply power to the indicator light.

12. The push mower of claim 1, further comprising a user interface (UI) terminal, wherein the controller is configured to control the motor energy not to supply power to at least the cutting motor and further configured to control the motor energy to supply power to the UI terminal.

13. The push mower of claim 1, further comprising an energy storage element, wherein the controller is configured to control the motor energy not to supply power to at least the cutting motor and further configured to control the motor energy to be stored in the energy storage element.

14. The push mower of claim 1, further comprising a circuit switch (26) for controlling a power supply circuit of the traveling motor to be turned on and off.

15. The push mower of claim 14, wherein the controller is further configured to control the circuit switch to turn off the power supply circuit when the traveling motor is driven by the external force and control the circuit switch to turn on the power supply circuit when the traveling motor is driven by the power supply energy connected to the power interface.

## Patentansprüche

1. Ein Schiebemäher (100), umfassend:
einen Körper (12), der zumindest eine Fahranordnung (121), einen Fahrmotor (23), der die Fahranordnung antreibt, eine Schneidanordnung (13) und einen Schneidmotor (25), der die Schneidanordnung antreibt, umfasst;
eine erste Treiberschaltung (22), die eingerichtet ist, um den Fahrmotor anzutreiben;
eine zweite Treiberschaltung (23), die eingerichtet ist, um den Schneidmotor anzutreiben;
eine Handgriffvorrichtung (11), die mit dem Körper verbunden ist und zumindest ein Betätigungselement (112) umfasst, das von einem Benutzer betätigt werden kann;
eine Steuereinheit (21), die eingerichtet ist, um den Fahrmotor und den Schneidmotor zu steuern; und
eine Stromschnittstelle (20) zum Anschluss einer Energieversorgung, die in der Lage ist, zumindest den Fahrmotor und den Schneidmotor mit Energie zu versorgen;
**dadurch gekennzeichnet, dass**
der Fahrmotor durch eine äußere Kraft antreibbar ist, um eine Motorenergie zu erzeugen; und
wobei die Steuereinheit eingerichtet ist, um:
einen elektrischen Energieübertragungspfad des Fahrmotors zu unterbrechen, wenn der Fahrmotor durch die äußere Kraft angetrieben wird, um die Motorenergie zu erzeugen;
oder die Motorenergie so zu steuern, dass sie zumindest den Schneidmotor nicht mit Energie versorgt, wenn der Fahrmotor durch die äußere Kraft angetrieben wird, um die Motorenergie zu erzeugen; und
oder die zweite Treiberschaltung so zu steuern, dass sie einen Leitfähigkeitszustand ändert, um die Statorwicklungen des Schneidmotors kurzzuschließen, wenn der Fahrmotor durch die äußere Kraft angetrieben wird, um die Motorenergie zu erzeugen.

2. Der Schiebemäher nach Anspruch 1, ferner umfassend einen Schaltkreis-Schalter (26), wobei der Schaltkreis-Schalter eingerichtet ist, um einen Energieversorgungskreis des Fahrmotors ein- und auszuschalten, um einen elektrischen Energieübertragungspfad des Fahrmotors zu unterbrechen, wenn der Fahrmotor durch die äußere Kraft angetrieben wird, um die Motorenergie zu erzeugen.

3. Der Schiebemäher nach Anspruch 2, wobei die Steuereinheit ferner eingerichtet ist, um den Schaltkreis-Schalter zu steuern, um den Energieversorgungskreis auszuschalten, wenn der Fahrmotor durch die äußere Kraft angetrieben wird, und den Schaltkreis-Schalter zu steuern, um den Energieversorgungskreis einzuschalten, wenn der Fahrmotor durch die mit der Stromschnittstelle verbundene Energieversorgung angetrieben wird.

4. Der Schiebemäher nach Anspruch 2, wobei der Schaltkreis-Schalter ein Relais umfasst.

5. Der Schiebemäher nach Anspruch 2, wobei der Schaltkreis-Schalter ein normalerweise offenes Relais umfasst.

6. Der Schiebemäher nach Anspruch 4, wobei das Relais ein Relais mit mindestens zwei Phasen ist.

7. Der Schiebemäher nach Anspruch 2, wobei der Schaltkreis-Schalter einen Thyristor umfasst.

8. Der Schiebemäher nach Anspruch 1, wobei der Fahrmotor einen Radnabenmotor umfasst.

9. Der Schiebemäher nach Anspruch 1, wobei der Fahrmotor in der Lage ist, die Motorenergie zu erzeugen, wenn der Schiebemäher durch eine äußere Kraft vorwärts geschoben oder rückwärts gezogen wird.

10. Der Schiebemäher nach Anspruch 1, wobei die Steuereinheit eingerichtet ist, um die Motorenergie so zu steuern, dass sie zumindest den Schneidmotor nicht mit Energie versorgt, und ferner eingerichtet ist, um die Motorenergie zu steuern, um das Batteriepaket zu laden, wenn die Stromschnittstelle mit einem Batteriepaket (300) verbunden ist.

11. Der Schiebemäher nach Anspruch 1, ferner umfassend ein Anzeigeleuchte, wobei die Steuereinheit eingerichtet ist, um die Motorenergie so zu steuern, dass sie zumindest den Schneidmotor nicht mit Energie versorgt, und ferner eingerichtet ist, um die Motorenergie zu steuern, um die Anzeigeleuchte mit Energie zu versorgen.

12. Der Schiebemäher nach Anspruch 1, ferner umfassend ein Benutzeroberflächen(UI)-Terminal, wobei die Steuereinheit eingerichtet ist, um die Motorenergie so zu steuern, dass sie zumindest den Schneidmotor nicht mit Energie versorgt, und ferner eingerichtet ist, um die Motorenergie zu steuern, um das UI-Terminal mit Energie zu versorgen.

13. Der Schiebemäher nach Anspruch 1, ferner umfassend ein Energiespeicherelement, wobei die Steuereinheit eingerichtet ist, um die Motorenergie so zu steuern, dass sie zumindest den Schneidmotor nicht mit Energie versorgt, und ferner eingerichtet ist, um die Motorenergie im Energiespeicherelement zu speichern.

14. Der Schiebemäher nach Anspruch 1, ferner umfassend einen Schaltkreis-Schalter (26) zum Ein- und Ausschalten eines Energieversorgungskreises des Fahrmotors.

15. Der Schiebemäher nach Anspruch 14, wobei die Steuereinheit ferner eingerichtet ist, um den Schaltkreis-Schalter zu steuern, um den Energieversorgungskreis auszuschalten, wenn der Fahrmotor durch die äußere Kraft angetrieben wird, und um den Schaltkreis-Schalter zu steuern, um den Energieversorgungskreis einzuschalten, wenn der Fahrmotor durch die mit der Stromschnittstelle verbundene Energieversorgung angetrieben wird.

## Revendications

1. Une tondeuse poussée (100), comprenant :
un corps (12) comprenant au moins un ensemble de déplacement (121), un moteur de déplacement (23) entraînant l'ensemble de déplacement, un ensemble de coupe (13), et un moteur de coupe (25) entraînant l'ensemble de coupe ;
un premier circuit de commande (22) configuré pour entraîner le moteur de déplacement ;
un second circuit de commande (23) configuré pour entraîner le moteur de coupe ;
un dispositif de poignée (11) relié au corps et comprenant au moins un élément d'action (112) destiné à être actionné par un utilisateur ;
une unité de commande (21) configurée pour commander le moteur de déplacement et le moteur de coupe ; et
une interface d'alimentation électrique (20) pour connecter une source d'énergie apte à alimenter au moins le moteur de déplacement et le moteur de coupe ;
**caractérisé en ce que**
le moteur de déplacement est entraînable par une force externe pour générer une énergie moteur ; et
la commande est configurée pour :
couper un chemin de transmission d'énergie électrique du moteur de déplacement lorsque le moteur de déplacement est entraîné par la force externe pour générer l'énergie moteur ;
ou commander que l'énergie moteur ne fournisse pas d'énergie au moins au moteur de coupe lorsque le moteur de déplacement est entraîné par la force externe pour générer l'énergie moteur ; et
ou commander le second circuit de commande pour changer un état de conduction afin de court-circuiter les enroulements statoriques du moteur de coupe lorsque le moteur de déplacement est entraîné par la force externe pour générer l'énergie moteur.

2. La tondeuse poussée selon la revendication 1, comprenant en outre un commutateur de circuit (26), le commutateur de circuit étant configuré pour commander l'ouverture et la fermeture d'un circuit d'alimentation du moteur de déplacement afin de couper un chemin de transmission d'énergie électrique du moteur de déplacement lorsque le moteur de déplacement est entraîné par la force externe pour générer l'énergie moteur.

3. La tondeuse poussée selon la revendication 2, dans laquelle la commande est en outre configurée pour commander le commutateur de circuit afin de fermer le circuit d'alimentation lorsque le moteur de déplacement est entraîné par la force externe, et pour commander commutateur de circuit afin d'activer le circuit d'alimentation lorsque le moteur de déplacement est entraîné par l'énergie d'alimentation électrique connectée à l'interface d'alimentation.

4. La tondeuse poussée selon la revendication 2, dans laquelle le commutateur de circuit comprend un relais.

5. La tondeuse poussée selon la revendication 2, dans laquelle le commutateur de circuit comprend un relais normalement ouvert.

6. La tondeuse poussée selon la revendication 4, dans laquelle le relais est un relais à au moins deux phases.

7. La tondeuse poussée selon la revendication 2, dans laquelle le commutateur de circuit comprend un thyristor.

8. La tondeuse poussée selon la revendication 1, dans laquelle le moteur de déplacement comprend un moteur de moyeu de roue.

9. La tondeuse poussée selon la revendication 1, dans laquelle le moteur de déplacement est apte à générer l'énergie moteur lorsque la tondeuse est poussée vers l'avant ou tirée vers l'arrière par une force externe.

10. La tondeuse poussée selon la revendication 1, dans laquelle la commande est configurée pour commander que l'énergie moteur ne fournisse pas d'énergie au moins au moteur de coupe et en outre configurée pour commander que l'énergie moteur charge un bloc-batterie lorsque l'interface d'alimentation est connectée à un bloc-batterie (300).

11. La tondeuse poussée selon la revendication 1, comprenant en outre un témoin lumineux, dans laquelle la commande est configurée pour commander que l'énergie moteur ne fournisse pas d'énergie au moins au moteur de coupe et en outre configurée pour commander que l'énergie moteur alimente le témoin lumineux.

12. La tondeuse poussée selon la revendication 1, comprenant en outre un terminal d'interface utilisateur (UI), dans laquelle la commande est configurée pour commander que l'énergie moteur ne fournisse pas d'énergie au moins au moteur de coupe et en outre configurée pour commander que l'énergie moteur alimente le terminal UI.

13. La tondeuse poussée selon la revendication 1, comprenant en outre un élément de stockage d'énergie, dans laquelle la commande est configurée pour commander que l'énergie moteur ne fournisse pas d'énergie au moins au moteur de coupe et en outre configurée pour commander que l'énergie moteur soit stockée dans l'élément de stockage d'énergie.

14. La tondeuse poussée selon la revendication 1, comprenant en outre un commutateur de circuit (26) destiné à commander l'ouverture et la fermeture d'un circuit d'alimentation du moteur de déplacement.

15. La tondeuse poussée selon la revendication 14, dans laquelle la commande est en outre configurée pour commander le commutateur de circuit afin de fermer le circuit d'alimentation lorsque le moteur de déplacement est entraîné par la force externe, et pour commander commutateur de circuit afin d'activer le circuit d'alimentation lorsque le moteur de déplacement est entraîné par l'énergie d'alimentation électrique connectée à l'interface d'alimentation.
